# EUROPÄISCHE PATENTSCHRIFT

(11) **EP 3 892 773 B1**
(45) Veröffentlichungstag und Bekanntmachung des Hinweises auf die Patenterteilung: **18.06.2025**
(21) Anmeldenummer: 21157740.8
(22) Anmeldetag: 18.02.2021
(51) Int. Cl.: D21B 1/32

(54) **VORRICHTUNG ZUM ZUGEBEN VON VERDUENNUNGSWASSER UND AUFLOESETROMMEL MIT DERSELBEN**
DEVICE FOR ADDING DILUTION WATER AND PULPING DRUM WITH THE SAME
DISPOSITIF D'AJOUT DE L'EAU DE DILUTION ET TAMBOUR DE DISSOLUTION DOTÉ D'UN TEL DISPOSITIF

(30) Priorität: 07.04.2020 CN 202010264150
(43) Veröffentlichungstag der Anmeldung: 13.10.2021
(73) Patentinhaber: Andritz (China) Ltd., Foshan, Guangdong 528000 (CN)
(72) Erfinder: GSCHEIDER, Alexander, 8785 Hohentauern (AT)
(74) Vertreter: Tschinder, Thomas

(56) Entgegenhaltungen:
- EP-A1- 1 420 108

## Beschreibung

Die vorliegende Erfindung betrifft eine Auflösetrommel mit einer Vorrichtung zum Zugeben von Verdünnungswasser, um darin befindliche Faserstoffe aufzulösen bzw. um die Konsistenz der Faserstoffsuspension zu verringern.

Bei Auflösetrommeln ist der Auflösebereich vom Sortierbereich durch eine Trennplatte getrennt, die in der Mitte eine Öffnung aufweist. Normalerweise ist auf der Seite des Auflösebereichs eine Schaufel an der Trennplatte angebracht. Diese Schaufel trägt dazu bei, die aufgelösten Faserstoffe (Zellstoffe) vorwärts zum Sortierbereich zu transportieren. Die Konsistenz im Auflösebereich kann sehr hoch sein (bis zu 30%) und daher ist es notwendig, am Anfang des Sortierbereichs mehr Verdünnungswasser zuzugeben. Dies funktioniert bei herkömmlichen Anlagen recht gut. Es ist jedoch auch bekannt, dass im Anfangsbereich des Sortierbereichs aufgrund der noch hohen Konsistenz nur relativ wenige Faserstoffe durch die Sieblöcher der Trommel gelangen können. Bei herkömmlichen Anlagen sind daher die Sieblöcher am Anfang des Sortierbereichs größer bzw. wird der Sortierbereich länger ausgeführt. Dies verringert die Qualität des Gutstoffs und erhöht die Investitionskosten und den Betriebsaufwand (Energieverbrauch).

Die EP 1 420 108 A1 offenbart eine Auflösetrommel mit einem rotierenden Flügelrad im Inneren, durch das die Auflösung der Faserstoffe verbessert werden soll.

Aufgabe der Erfindung ist es, eine Auflösetrommel mit einer Vorrichtung bereitzustellen, die am Ende des Auflösebereichs der Auflösetrommel angeordnet werden ist und die eine kontinuierliche Verdünnung des Zellstoffs sicherstellt.

Gelöst wird diese Aufgabe mit einer Vorrichtung gemäß Patentanspruch 1.

Die Vorrichtung zum Zugeben des Verdünnungswassers umfasst eine Ringnut, die um den Auflösebereich der Auflösetrommel angeordnet ist, wobei der Nutboden der Ringnut die Außenwand der Auflösetrommel bildet. Die beiden gegenüberliegende Ringnutwände ragen entlang der Radialrichtung der Auflösetrommel nach außen.

Außerdem weist die erfindungsgemäße Vorrichtung mehrere gekrümmte Rohre auf, die aus dem Bereich der Ringnut in das Innere der Trommel hineinragen, wobei die radial auf der inneren Seite befindliche Öffnung jedes gekrümmten Rohrs gegen die Drehrichtung der Trommel ausgerichtet ist und die radial auf der äußeren Seite befindliche Öffnung jedes gekrümmten Rohrs durch ein Nutbodenloch mit der Ringnut verbunden ist. Das Verdünnungswasser aus der Ringnut kann durch die jeweiligen gekrümmten Rohre in die Auflösetrommel fließen. Da die radial auf der inneren Seite befindlichen gekrümmten Rohre gegen die Drehrichtung der Trommel ausgerichtet sind, können Faserstoffe während der Drehung der Auflösetrommel nicht in die gekrümmten Rohre oder in die Ringnuten gelangen. Dadurch wird ein Verstopfen der gekrümmten Rohre und der Ringnut vermieden. Selbst wenn einige Faserstoffe in die Rohre gelangen sollten, so werden sie durch das Verdünnungswasser wieder in die Auflösetrommel zurückgespült.

Durch die Erfindung wird eine kontinuierliche Verdünnung am Ende des Auflösebereichs bereitgestellt, um die Konsistenz der Faserstoffsuspension beim Eintritt in den Sortierbereich zu verringern, wobei die hohe Konsistenz im Auflösebereich beibehalten werden kann. Die Verringerung der Faserstoffkonsistenz ermöglicht die Verwendung kleinerer Sieblöcher. Dadurch wird die Gutstoffqualität verbessert, außerdem wird dadurch eine schnellere Abfuhr der Faserstoffe durch die Sieblöcher ermöglicht. Dies ermöglicht die Verwendung eines kürzeren Sortierbereichs mit einem niedrigeren Energieverbrauch und einer geringeren Investition.

Die gekrümmten Rohre können entweder bogenförmig, abgewinkelt oder ellbogenförmig sein, solange die radial auf der inneren Seite befindlichen Öffnungen der gekrümmten Rohre gegen die Drehrichtung der Trommel ausgerichtet sind. Vorzugsweise können die gekrümmten Rohre auf der Vorderseite in Drehrichtung der Auflösetrommel eine Form aufweisen, die zum Anheben und Mischen der Faserstoffe geeignet ist. Somit können die gekrümmten Rohre als zusätzliche Hub- bzw. Mischelemente verwendet werden, was für die Vermischung von Verdünnungswasser und Faserstoffen vorteilhaft ist.

Die Querschnitte der gekrümmten Rohre sind in der erfindungsgemäßen Vorrichtung nicht auf die Kreisform beschränkt, sie können auch oval, tropfenförmig, quadratisch oder rechteckig sein, oder eine andere polygonale Form aufweisen.

Außerdem weist die erfindungsgemäße Vorrichtung eine Ringnutabdeckung auf, die fest angeordnet ist (also nicht mit der Auflösetrommel mitrotiert) und die die Ringnut bedeckt. Zwischen der Ringnutabdeckung und der Ringnut ist vorzugsweise auf beiden axialen Seiten der Ringnut eine Dichtung angeordnet. Die Dichtung ist vorzugsweise im Außenbereich der Ringnutwand befestigt, jedoch kann die Dichtung auch an der Ringnutabdeckung befestigt sein. Die Ringnutabdeckung dient zum Abdecken der Ringnut, um den Austritt des Verdünnungswassers aus der Ringnut zu verhindern.

Die erfindungsgemäße Vorrichtung weist auch eine Zufuhrleitung für Verdünnungswasser auf, die in Ringnutabdeckung mündet. Die Vorrichtung kann auch mehrere Zufuhrleitungen für Verdünnungswasser aufweisen und die jeweiligen Zufuhrleitungen sind vorzugsweise am oberen Ende der Auflösetommel angeordnet. Die Zufuhrleitung für Verdünnungswasser können in die Ringnut hineinragen.

Außerdem weist die erfindungsgemäße Vorrichtung eine Ablassleitung für Verdünnungswasser auf, die in die Ringnutabdeckung mündet und zum Sammeln des Verdünnungswassers dient. Es ist vorteilhaft, wenn die Ablassleitung für Verdünnungswasser direkt unter der Auflösetrommel angeordnet ist. Überschüssiges Verdünnungswasser kann durch die Ablassleitung für Verdünnungswasser abgelassen werden und ggf. können die in die Ringnut eingetreten Faserstoffe auch durch die Ablassleitung abgelassen werden.

Die erfindungsgemäße Vorrichtung zum Zugeben des Verdünnungswassers kann auch mehrere Ringnuten aufweisen.

Somit kann durch die erfindungsgemäße Vorrichtung die Konsistenz der in den Sortierbereich eintretenden Faserstoffsuspension von 25%-30% auf 5%-15%, vorzugsweise auf 6%-10%, verringert werden. Bei dieser Konsistenz im Sortierbereich liegt das Hauptaugenmerk darauf, die Sieblöcher sauber zu halten, daher ist in diesem Abschnitt wenig Verdünnung erforderlich. Dies spart Pumpenergie.

Verglichen mit herkömmlichen Sprühwasserrohren erfordert die Vorverdünnung mit der erfindungsgemäßen Vorrichtung einen niedrigeren Wasserdruck, um den gleichen Verdünnungsgrad in der Trommel zu erreichen, weshalb der erforderliche Pumpendruck auch verringert wird.

Die erfindungsgemäße Vorrichtung kann mehrere Leitplatten aufweisen, die in der Ringnut zur Einleitung des Verdünnungswassers in die gekrümmten Rohre angeordnet sind.

Im Folgenden wird die Erfindung an Hand von Zeichnungen beschrieben.
Fig.1 zeigt schematisch eine Auflösetrommel, wobei die erfindungsgemäße Vorrichtung zum Zugeben von Verdünnungswasser am Ende des Auflösebereichs der Auflösetrommel angeordnet ist.
Fig.2 zeigt schematisch eine Querschnittsansicht des Endes des Auflösebereichs der Auflösetrommel.
Fig.3 zeigt schematisch eine detaillierte Ansicht der Vorrichtung zum Zugeben des Verdünnungswassers.
Fig.4 zeigt schematisch eine perspektivische Ansicht der erfindungsgemäßen Vorrichtung.
Fig.5 zeigt schematisch eine Querschnittsansicht der Vorrichtung zum Zugeben von Verdünnungswasser.
Fig. 6 zeigt schematisch eine Teilquerschnittsansicht der Vorrichtung zum Zugeben von Verdünnungswasser.

In den Figuren sind gleiche oder gleichwirkende Elemente durchgängig mit den gleichen Bezugszeichen versehen

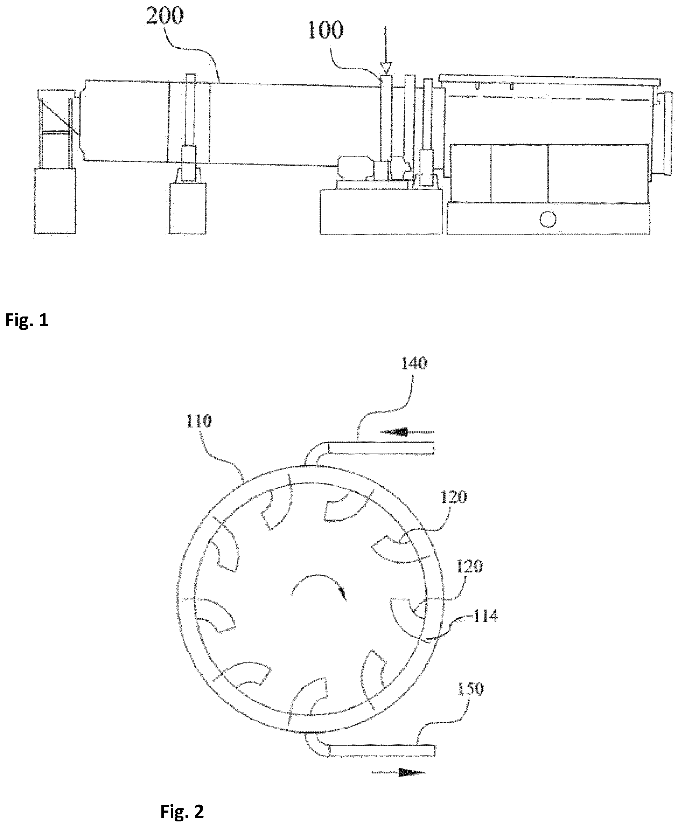

Fig. 1 zeigt schematisch eine Auflösetrommel 200, wobei eine Vorrichtung 100 zum Zugeben des Verdünnungswassers am Ende des Auflösebereichs der Auflösetrommel 200 angeordnet ist. Die erfindungsgemäße Vorrichtung 100 ermöglicht eine kontinuierliche Verdünnung am Ende des Auflösebereichs. Somit kann die Konsistenz der im Sortierbereich eingetreten Faserstoffsuspension verringert werden, während die hohe Konsistenz der Faserstoffe im Auflösebereich beibehalten wird. Es kann eine Vielzahl von Vorrichtungen 100 zum Zugeben von Verdünnungswassers 100 in einer Auflösetrommel 200 vorgesehen sein. Hier ist lediglich nur eine Vorrichtung 100 zum Zugeben des Verdünnungswasser als Beispiel angezeigt.

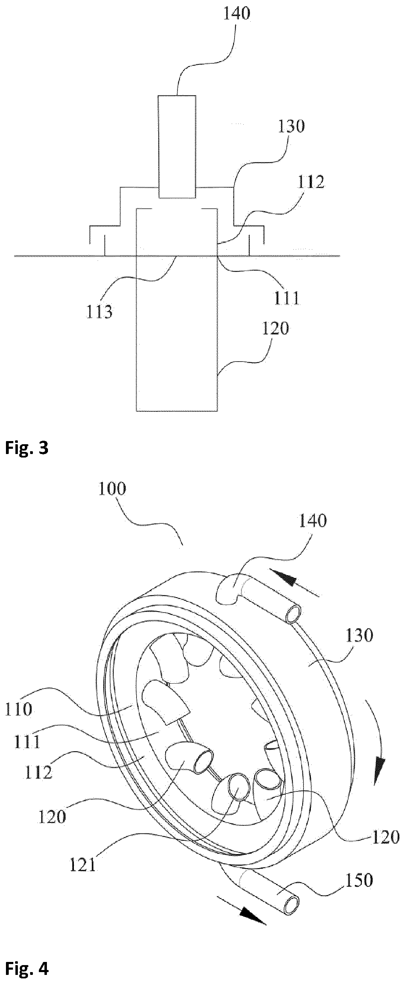

Fig. 2 zeigt schematisch eine Querschnittsansicht des Endes des Auflösebereichs der Auflösetrommel 200. Am Ende des Auflösebereichs ist eine Vorrichtung 100 zum Zugeben des Verdünnungswassers vorgesehen. Das Verdünnungswasser tritt durch die Zufuhrleitung für Verdünnungswasser 140 in die Ringnut 110 ein, die um den Auflösebereich der Auflösetrommel 200 angeordnet ist und die mit der Auflösetrommel 200 mitrotiert. Mit der Drehung der Auflösetrommel 200 tritt das Verdünnungswasser durch mehrere in die Trommel hineinragende gekrümmte Rohre 120 in die Trommel ein, sodass die Faserstoffe verdünnt werden. Übermäßiges Verdünnungswasser kann durch eine unten vorgesehene Ablassleitung 150 abgelassen werden. Fig. 2 zeigt deutlich (ebenso wie Fig. 4), dass eine radial auf der inneren Seite befindliche Öffnung 121 des gekrümmten Rohrs 120 gegen die Drehrichtung der Auflösetrommel 200 ausgerichtet ist, damit keine Faserstoffe in die gekrümmten Rohre 120 gelangen können. Auf diese Weise kann das Verstopfen der gekrümmten Rohre 120 und der Ringnut 110 vorteilhafterweise vermieden werden. Zusätzlich haben die gekrümmte Rohre 120 auf der vorderen Seite entlang der Drehrichtung der Auflösetrommel 200 eine Flächenform, die zum Anheben und Mischen der Faserstoffe geeignet ist. Im vorliegenden Beispiel sind die gekrümmten Rohre 120 bogenförmig ausgeführt, sodass sie als spezielle Anhebeelemente und Mischelemente angewendet werden können. So kann das Verdünnungswasser in kürzester Zeit mit den Faserstoffen gemischt werden. Darüber hinaus weist die Vorrichtung 100 zum Zugeben des Verdünnungswassers mehrere Leitplatten 114 auf, die in der Ringnut 110 zur Einleitung des Verdünnungswassers in die gekrümmte Rohre 120 angeordnet sind.

Fig. 3 zeigt schematisch eine detaillierte Ansicht der Vorrichtung 100. In der Vorrichtung 100 ist eine Ringnut 110 um den Auflösebereich der Auflösetrommel 200 angeordnet, wobei der Nutboden 111 der Ringnut 110 die Außenwand der Auflösetrommel 200 bildet. Die zwei gegenüberliegende Ringnutwände 112 ragen entlang der Radialrichtung der Auflösetrommel 200 nach außen. Die gekrümmten Rohre 120 ragen aus dem Bereich der Ringnut 110 ins Innere der Auflösetrommel 200 hinein, wobei die radial auf der äußeren Seite befindliche Öffnung jedes gekrümmten Rohrs 120 durch ein Nutbodenloch 113 mit dem Inneren der Ringnut 110 verbunden ist. Die Ringnutabdeckung 130 ist drehfest (rotiert nicht mit der Trommel mit) angeordnet und bedeckt die Ringnut 110. Zwischen der feststehenden Ringnutabdeckung 130 und der rotierenden Ringnut 110 ist vorzugsweise eine Dichtung angeordnet (hier nicht im Detail gezeigt), sodass das Verdünnungswasser nicht zwischen den Ringnutwänden 112 und der Ringnutabdeckung 130 austreten kann. Außerdem ist auch eine Zufuhrleitung 140 vorgesehen, die im oberen Bereich der Auflösetrommel 200 in die Ringnutabdeckung 130 mündet.

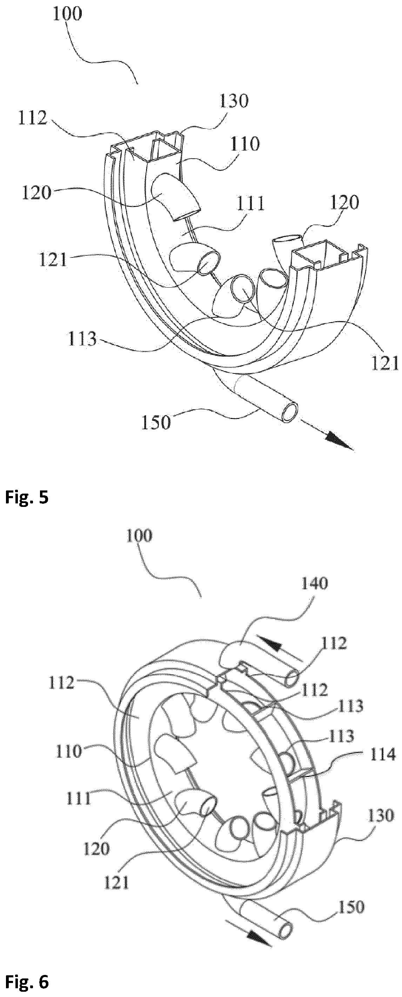

Fig. 4 zeigt schematisch eine perspektivische Ansicht der Vorrichtung 100 und Fig. 5 zeigt schematisch eine Querschnittsansicht davon.

Es können auch mehrere Zufuhrleitungen 140 für das Verdünnungswasser vorgesehen sein.

Fig. 6 zeigt schematisch eine Teilquerschnittsansicht der Vorrichtung 100 zum Zugeben von Verdünnungswasser. Wie gezeigt, sind mehrere Nutbodenlöcher 113 am Nutboden 111 der Ringnut 110 angeordnet. Das Verdünnungswasser in der Ringnut 110 kann durch die Nutbodenlöcher 113 in die jeweiligen gekrümmten Rohre 120 und dann durch deren Öffnungen 121 in die Auflösetrommel 200 eintreten.

Die obige Beschreibung beschreibt eine bevorzugte Ausführungsformen der vorliegenden Erfindung.

### Bezugszeichenliste

100 Vorrichtung zum Zugeben von Verdünnungswasser
200 Auflösetrommel
110 Ringnut
111 Nutboden
112 Ringnutwand
113 Nutbodenloch
114 Leitplatte
120 gekrümmtes Rohr
121 radial innere Öffnung des gekrümmten Rohres
130 Ringnutabdeckung
140 Zufuhrleitung für Verdünnungswasser
150 Ablassleitung für Verdünnungswasser

## Patentansprüche

1. Auflösetrommel (200) mit einer Vorrichtung (100) zum Zugeben von Verdünnungswasser, die am Ende eines Auflösebereiches der rotierenden Auflösetrommel (200) angeordnet ist, um das Verdünnungswasser mit Zellstoffen in der Auflösetrommel (200) zu mischen, wobei
die Vorrichtung (100) zum Zugeben des Verdünnungswassers eine Ringnut (110), die um den Auflösebereich der Auflösetrommel (200) angeordnet ist, umfasst, **dadurch gekennzeichnet, dass** der Nutboden (111) der Ringnut (110) die Außenwand der Auflösetrommel (200) im Auflösebereich bildet und zwei gegenüberliegende Ringnutwände (112) entlang der Radialrichtung der Auflösetrommel (200) nach außen ragen;
ferner **gekennzeichnet durch** mehrere gekrümmte Rohre (120), die aus dem Bereich der Ringnut (110) ins Innere der Auflösetrommel (200) hineinragen, wobei die radial auf der inneren Seite befindliche Öffnung (121) jedes gekrümmten Rohrs (120) gegen die Drehrichtung der Auflösetrommel (200) ausgerichtet ist und die radial auf der äußeren Seite befindliche Öffnung jedes gekrümmten Rohrs (120) durch ein Nutbodenloch (113) im Nutboden (111) mit der Ringnut (110) verbunden ist;
eine Ringnutabdeckung (130), die drehfest angeordnet ist und die Ringnut (110) am Außenumfang bedeckt;
eine Zufuhrleitung (140) für Verdünnungswasser, die in die Ringnutabdeckung (130) mündet; sowie
eine Ablassleitung (150) zum Sammeln und Abführen des Verdünnungswassers, die in die Ringnutabdeckung (130) mündet.

2. Auflösetrommel (200) mit einer Vorrichtung (100) zum Zugeben von Verdünnungswasser nach Anspruch 1, **dadurch gekennzeichnet, dass** die Konsistenz der Faserstoffsuspension von einer hohen Konsistenz von bis zu 30% auf 5-15% verdünnt wird.

3. Auflösetrommel (200) mit einer Vorrichtung (100) zum Zugeben von Verdünnungswasser nach Anspruch 2, **dadurch gekennzeichnet, dass** die Konsistenz der Faserstoffsuspension auf 6-10% verdünnt wird.

4. Auflösetrommel (200) mit einer Vorrichtung (100) zum Zugeben von Verdünnungswasser nach einem der Ansprüche 1 bis 3, **dadurch gekennzeichnet, dass** die Vorrichtung (100) mehrere Zufuhrleitungen (140) für Verdünnungswasser aufweist, die am oberen Teil der Auflösetrommel (200) angeordnet sind.

5. Auflösetrommel (200) mit einer Vorrichtung (100) zum Zugeben von Verdünnungswasser nach einem der Ansprüche 1 bis 4, **dadurch gekennzeichnet, dass** die Ablassleitung (150) direkt unter der Auflösetrommel (200) angeordnet ist.

6. Auflösetrommel (200) mit einer Vorrichtung (100) zum Zugeben von Verdünnungswasser nach einem der Ansprüche 1 bis 5, **dadurch gekennzeichnet, dass** zwischen der Ringnutabdeckung (130) und der Ringnut (110) eine Dichtung vorgesehen ist, die einen Austritt von Verdünnungswasser zwischen der Ringnutabdeckung (130) und der Ringnutwand (112) verhindert.

7. Auflösetrommel (200) mit einer Vorrichtung (100) zum Zugeben von Verdünnungswasser nach Anspruch 6, **dadurch gekennzeichnet, dass** die Dichtung im Außenbereich der Ringnutwand (112) befestigt ist.

8. Auflösetrommel (200) mit einer Vorrichtung (100) zum Zugeben von Verdünnungswasser nach einem der Ansprüche 1 bis 7, **dadurch gekennzeichnet, dass** der Querschnitt der gekrümmten Rohre (120) kreisförmig, oval, tropfenförmig, quadratisch, oder rechteckig ist.

9. Auflösetrommel (200) mit einer Vorrichtung (100) zum Zugeben von Verdünnungswasser nach einem der Ansprüche 1 bis 8, **dadurch gekennzeichnet, dass** die gekrümmten Rohre (120) auf der Vorderseite in Drehrichtung der Auflösetrommel (200) betrachtet, eine Flächenform aufweisen, die zum Anheben und Mischen der Faserstoffe geeignet ist.

10. Auflösetrommel (200) mit einer Vorrichtung (100) zum Zugeben von Verdünnungswasser nach einem der Ansprüche 1 bis 9, **dadurch gekennzeichnet, dass** die gekrümmten Rohre (120) bogenförmig sind.

11. Auflösetrommel (200) mit einer Vorrichtung (100) zum Zugeben von Verdünnungswasser nach einem der Ansprüche 1 bis 9, **dadurch gekennzeichnet, dass** die gekrümmten Rohre (120) abgewinkelt bzw. ellbogenförmig sind.

12. Auflösetrommel (200) mit einer Vorrichtung (100) zum Zugeben von Verdünnungswasser nach einem der Ansprüche 1 bis 11, **dadurch gekennzeichnet, dass** die Vorrichtung (100) mehrere Ringnuten (110) aufweist.

13. Auflösetrommel (200) mit einer Vorrichtung (100) zum Zugeben von Verdünnungswasser nach einem der Ansprüche 1 bis 12, **dadurch gekennzeichnet, dass** die Vorrichtung (100) mehrere Leitplatten (114) aufweist, die in der Ringnut (110) zur Einleitung des Verdünnungswassers in die gekrümmten Rohre (120) angeordnet sind.

## Claims

1. Drum pulper (200) with a device (100) for adding dilution water, disposed at the end of a pulping range of the rotating drum pulper (200) for mixing the dilution water with pulp in the drum pulper (200), wherein the dilution water adding device (100) comprises an annular groove (110) disposed around the pulping range of the drum pulper (200), **characterised in that** the groove bottom (111) of the annular groove (110), forms the outer wall of the drum pulper (200) in the pulping range and two opposing annular groove walls (112) project outwards along the radial direction of the drum pulper (200);
further **characterised by** a plurality of curved pipes (120) which project from the region of the annular groove (110) into the interior of the drum pulper (200), wherein the opening (121) of each curved pipe (120) located radially on the inner side is aligned against the direction of rotation of the drum pulper (200) and the opening of each curved pipe (120) located radially on the outer side is connected to the annular groove (110) by a groove bottom hole (113) in the groove bottom (111);
an annular groove cover (130), which is arranged to be non-rotatable and covers the annular groove (110) on the outer circumference;
a feed line (140) for dilution water, which opens into the annular groove cover (130); and
a discharge line (150) for collecting and draining the dilution water, which opens into the annular groove cover (130).

2. Drum pulper (200) with a device (100) for adding dilution water according to claim 1, **characterised in that** the consistency of the pulp suspension is diluted from a high consistency of up to 30% to 5-15%.

3. Drum pulper (200) with a device (100) for adding dilution water according to claim 2, **characterised in that** the consistency of the pulp suspension is diluted to 6-10%.

4. Drum pulper (200) with a device (100) for adding dilution water according to one of claims 1 to 3, **characterised in that** the device (100) comprises a plurality of feed lines (140) for dilution water, which are arranged at the upper part of the drum pulper (200).

5. Drum pulper (200) with a device (100) for adding dilution water according to one of claims 1 to 4, **characterised in that** the discharge line (150) is arranged directly below the drum pulper (200).

6. Drum pulper (200) with a device (100) for adding dilution water according to one of claims 1 to 5, **characterised in that** a seal is provided between the annular groove cover (130) and the annular groove (110), which prevents dilution water from escaping between the annular groove cover (130) and the annular groove wall (112).

7. Drum pulper (200) with a device (100) for adding dilution water according to claim 6, **characterised in that** the seal is attached to the outside of the annular groove wall (112).

8. Drum pulper (200) with a device (100) for adding dilution water according to one of claims 1 to 7, **characterised in that** the cross-section of the curved pipes (120) are circular, oval, drop-shaped, square or rectangular.

9. Drum pulper (200) with a device (100) for adding dilution water according to one of claims 1 to 8, **characterised in that** the curved pipes (120) have a surface shape on the front side, viewed in the direction of rotation of the drum pulper (200), which is suitable for lifting and mixing the pulp.

10. Drum pulper (200) with a device (100) for adding dilution water according to one of claims 1 to 9, **characterised in that the** curved pipes (120) are arch-shaped.

11. Drum pulper (200) with a device (100) for adding dilution water according to one of claims 1 to 9, **characterised in that** the curved pipes (120) are angled or elbow-shaped.

12. Drum pulper (200) with a device (100) for adding dilution water according to one of claims 1 to 11, **characterised in that** the device (100) has a plurality of annular grooves (110).

13. Drum pulper (200) with a device (100) for adding dilution water according to one of claims 1 to 12, **characterised in that** the device (100) comprises a plurality of guide plates (114) arranged in the annular groove (110) for introducing the dilution water into the curved tubes (120).

## Revendications

1. Triturateur à tambour (200) équipé d'un dispositif (100) permettant d'ajouter de l'eau de dilution qui est disposé à l'extrémité d'une zone de désintégration du triturateur à tambour rotatif (200) pour mélanger l'eau de dilution à la cellulose dans le triturateur à tambour (200), **caractérisé en ce que** le dispositif (100) permettant d'ajouter l'eau de dilution comprend une rainure annulaire (110) qui est disposée autour de la zone de désintégration du triturateur à tambour (200), le fond de rainure (111) de la rainure annulaire (110), forme la paroi extérieure du triturateur à tambour (200) dans la zone de désintégration et deux parois de rainure annulaire (112) se faisant face font saillie vers l'extérieur dans le sens radial du triturateur à tambour (200);
en outre **caractérisé par** une pluralité de tubes incurvés (120) qui font saillie depuis la zone de la rainure annulaire (110) vers l'intérieur du triturateur à tambour (200), dans lequel l'ouverture (121) de chaque tube incurvé (120) située radialement sur le côté intérieur est orienté contre le sens de rotation du triturateur à tambour (200) et l'ouverture de chaque tube incurvé (120) située radialement sur le côté extérieur est reliée à la rainure annulaire (110) par un trou inférieur de rainure (113) au fond de la rainure (111) ;
un couvercle de rainure annulaire (130), qui est monté solidaire en rotation et recouvre la rainure annulaire (110) sur la circonférence extérieure ;
une conduite d'acheminement (140) pour l'eau de dilution, qui débouche dans le couvercle de rainure annulaire (130) ; et
une conduite d'évacuation (150) servant à collecter et à évacuer l'eau de dilution, qui débouche dans le couvercle de rainure annulaire (130).

2. Triturateur à tambour (200) équipé d'un dispositif (100) permettant d'ajouter de l'eau de dilution selon la revendication 1, **caractérisé en ce que** la consistance de la pâte en suspension est diluée, passant d'une consistance élevée de 30 % maximum à 5 - 15 %.

3. Triturateur à tambour (200) équipé d'un dispositif (100) permettant d'ajouter de l'eau de dilution selon la revendication 2, **caractérisé en ce que** la consistance de la pâte en suspension est diluée à 6-10 %.

4. Triturateur à tambour (200) équipé d'un dispositif (100) permettant d'ajouter de l'eau de dilution selon l'une quelconque des revendications 1 à 3, **caractérisé en ce que** le dispositif (100) comprend une pluralité de conduites d'acheminement (140) pour l'eau de dilution, qui sont disposées dans la partie supérieure du triturateur à tambour (200).

5. Triturateur à tambour (200) équipé d'un dispositif (100) permettant d'ajouter de l'eau de dilution selon l'une quelconque des revendications 1 à 4, **caractérisé en ce que** la conduite d'évacuation (150) est disposée immédiatement en dessous du triturateur à tambour (200).

6. Triturateur à tambour (200) équipé d'un dispositif (100) permettant d'ajouter de l'eau de dilution selon l'une quelconque des revendications 1 à 5, **caractérisé en ce qu'**un joint d'étanchéité, qui empêche que l'eau de dilution ne s'échappe entre le couvercle de rainure annulaire (130) et la paroi de rainure annulaire (112), est disposé entre le couvercle de rainure annulaire (130) et la rainure annulaire (110).

7. Triturateur à tambour (200) équipé d'un dispositif (100) permettant d'ajouter de l'eau de dilution selon la revendication 6, **caractérisé en ce que** le joint d'étanchéité est fixé dans la zone extérieure de la paroi de rainure annulaire (112).

8. Triturateur à tambour (200) équipé d'un dispositif (100) permettant d'ajouter de l'eau de dilution selon l'une quelconque des revendications 1 à 7, **caractérisé en ce que** la section transversale des tubes incurvés (120) est circulaire, ovale, en forme de goutte, carré ou rectangulaire.

9. Triturateur à tambour (200) équipé d'un dispositif (100) permettant d'ajouter de l'eau de dilution selon l'une quelconque des revendications 1 à 8, **caractérisé en ce que** les tubes incurvés (120) ont une forme plate sur la face avant, lorsqu'ils sont observés dans le sens de rotation du triturateur à tambour (200), ladite forme étant appropriée pour soulever et mélanger la pâte.

10. Triturateur à tambour (200) équipé d'un dispositif (100) permettant d'ajouter de l'eau de dilution selon l'une quelconque des revendications 1 à 9, **caractérisé en ce que** les tubes incurvés (120) se présente sous la forme d'arc.

11. Triturateur à tambour (200) équipé d'un dispositif (100) permettant d'ajouter de l'eau de dilution selon l'une quelconque des revendications 1 à 9, **caractérisé en ce que** les tubes incurvés (120) sont incurvés ou en forme de coude.

12. Triturateur à tambour (200) équipé d'un dispositif (100) permettant d'ajouter de l'eau de dilution selon l'une quelconque des revendications 1 à 11, **caractérisé en ce que** le dispositif (100) comprend une pluralité de rainures annulaires (110).

13. Triturateur à tambour (200) équipé d'un dispositif (100) permettant d'ajouter de l'eau de dilution selon l'une quelconque des revendications 1 à 12, **caractérisé en ce que** le dispositif (100) comprend une pluralité de plaques de guidage (114) disposées dans la rainure annulaire (110) qui permettent d'introduire l'eau de dilution dans les tubes incurvés (120).
